# EUROPEAN PATENT APPLICATION

(11) **EP 2 878 290 A1**
(43) Date of publication of application: **03.06.2015**
(21) Application number: 13195341.6
(22) Date of filing: 02.12.2013
(51) Int. Cl.: A61H 3/04, E05B 73/00

(54) **Supportive vehicle having a fixing system**

(71) Applicant: TOPRO GmbH, 82256 Fürstenfeldbruck (DE)
(72) Inventor: Appel, Thomas, 82256 Fürstenfeldbruck (DE)
(74) Representative: Zimmermann & Partner Patentanwälte mbB

(57) **Abstract**

The present invention is directed at a supportive vehicle (100), particularly a rollator, having a fixing device (20, 120, 220). The fixing device (20, 120, 220) includes a housing (22, 122, 222), a first fixing unit (30) associated with the housing (22, 122, 222) and configured to be fixed to the supportive vehicle (100), a flexible unit (23) having a first end and a second end (25), a retractor mechanism for the flexible unit (23), wherein the retractor mechanism is provided in the housing (22, 122, 222), and the first end of the flexible unit (23) is fixed to said retractor mechanism, and a secure element provided at the second end and configured to fix the supportive vehicle (100).

## Description

### FIELD OF THE DISCLOSURE

The present disclosure relates to a supportive vehicle, and particularly a supportive vehicle such as a rollator used by lame people as an aid in walking, a baby stroller, a trolley or a shopping trolley, and relates to a supportive vehicle having a fixing system. More particularly, the present disclosure relates to a supportive vehicle having a fixing system providing extended functionality. The supportive vehicle as disclosed herein may particularly be a rollator, a baby stroller, a trolley or a shopping trolley.

### BACKGROUND OF THE DISCLOSURE

Certain health conditions hinder vertical balance and other mechanics of walking. So-called rollators are used for helping disabled or old person's activity and assuring his/her safety. Rollators as understood herein are wheeled supports which aid individuals who have function in their lower limbs, but lack the strength or balance to enable them to walk unsupported. A rollator should be constructed firm, secure, and reliable to avoid any possible accident. Generally, a rollator includes four wheels or at least three wheels in order to avoid the need to lift the device as is the case for walkers. Further, these devices usually include a seat so that a user may use the device to sit and rest.

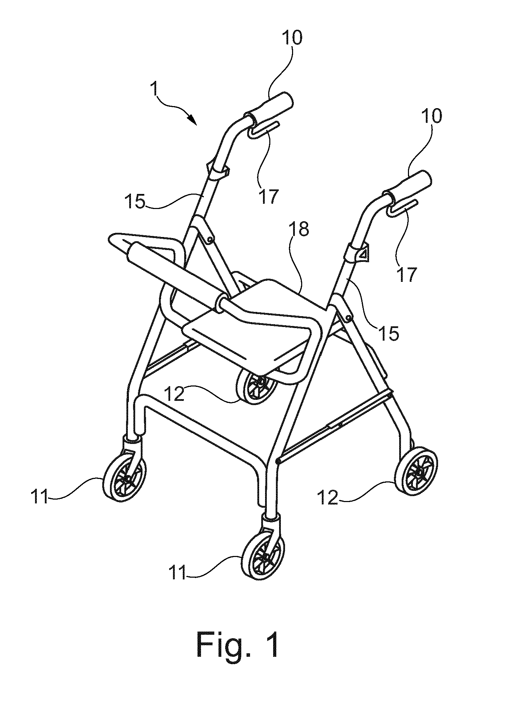

Figure 1 shows an example of a rollator 1. The rollator 1 includes four wheels. Normally, the two front wheels 11 are twistable whereas the two back wheels 12 are fixed. The rollator 1 may include further features such as a seat 18, a bag (not shown) or a basket. The rollator 1 has two support bars 15 supporting hand grips 10. The rollator 1 may have brake handles 17, by which the rollator brakes can be actuated to allow the user to stop the rollator 1, or to reduce the rollator's speed.

However, when persons use public transport, such as busses and trains, the rollator may undesirably start moving in the bus or train when the bus or train brakes or accelerates. Therefore, known rollators 1 include brake handles 17, by which rollator brakes can be actuated to allow the user to stop the rollator 1, or to reduce the rollator's speed. However, known brakes may not suffice to keep the rollator steadily in place when the bus or train is moving, in particular accelerating or decelerating.

### BRIEF SUMMARY OF THE DISCLOSURE

In light of the above, according to an aspect, a supportive vehicle, and particular a rollator, stroller or trolley, having a fixing system is provided. The fixing system includes a housing, a first fixing unit associated with the housing and configured to be fixed to the supportive vehicle, a flexible unit having a first end and a second end, a retractor mechanism for the flexible unit, wherein the retractor mechanism is provided in the housing, and the first end of the flexible unit is fixed to said retractor mechanism, and a secure element provided at the second end and configured to fix the supportive vehicle.

According to another aspect, a fixing system for a supportive vehicle, and particular for a rollator, is provided. The fixing system for a supportive vehicle includes a housing, a first fixing unit associated with the housing and configured to be fixed to the supportive vehicle, a flexible unit having a first end and a second end, a retractor mechanism for the flexible unit, wherein the retractor mechanism is provided in the housing, and the first end of the flexible unit is fixed to said retractor mechanism, and a secure element provided at the second end and configured to fix the supportive vehicle

According to a further aspect, a supportive vehicle is provided having a fixing system as described herein.

Further aspects, details and embodiments are evident from the dependent claims, the description and the accompanying drawings.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Figure 1: shows a schematic view of a supportive vehicle known in the art;
- Figure 2: shows a schematic view of a supportive vehicle having a fixing system according to embodiments described herein;
- Figure 3: shows a schematic view of a supportive vehicle being fastened to a bar, for instance in a bus or train, by means of a fixing system according to embodiments described herein;
- Figure 4: shows a schematic view of a fixing system according to embodiments described herein;
- Figure 5: shows a schematic view of a supportive vehicle being fastened to a bar, for instance in a bus or train, by means of a fixing system according to embodiments described herein;
- Figures 6A and 6B: show schematic views of a fixing system according to embodiments described herein;
- Figure 7: shows another schematic view of the fixing system of figure 6A according to embodiments described herein;
- Figure 8: shows a plan view of the fixing system of figures 5 and 6A being fastened to a bar, for instance in a bus or train;
- Figure 9: shows another plan view of a fixing system being fastened to a bar, for instance in a bus or train;
- Figure 10: shows a schematic view of a supportive vehicle having another fixing system according to embodiments described herein;
- Figure 11: shows a schematic view of the fixing system shown in figure 10 according to embodiments described herein;
- Figure 12: shows a plan view of the fixing system of figures 10 and 11 being fastened to a bar, for instance in a bus or train; and
- Figure 13: shows a schematic view of still another fixing system according to embodiments described herein.

### DETAILED DESCRIPTION

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Referring to the drawings, like or similar elements are designated with identical reference numbers throughout the different figures. Although the embodiments of the present disclosure are described with reference to a rollator, it is to be understood that the fixing system is not limited thereto and can be used for other supportive vehicles, such as baby strollers, trolleys such as shopping trolleys and the like.

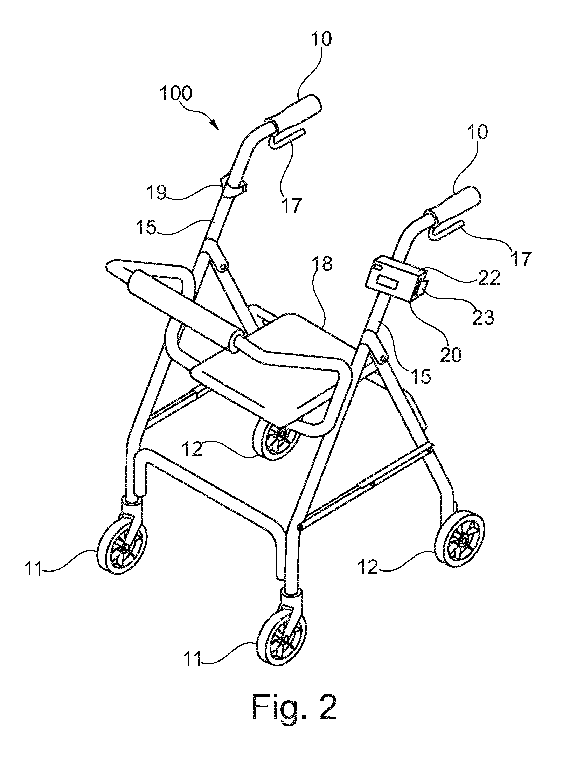

Figure 2 shows a schematic view of a supportive vehicle 100 having a fixing system 20 according to embodiments described herein. In typical embodiments, the supportive vehicle 100 as described herein is a rollator. Notably, a rollator may have four wheels with typically the axis of two of them being pivotable for guiding the rollator in the desired direction. According to embodiments, two of the wheels have a fixed axis in relation to the rollator. The rollator may be equipped with a brake.

According to some embodiments, the supportive vehicle 100 may include four wheels, e.g., two front wheels 11 and two back wheels 12. As an example, the two front wheels 11 are twistable whereas the two back wheels 12 are fixed. The rollator 100 may further include a seat 18, a bag (not shown) or a basket. According to some embodiments, the supportive vehicle 100 can have two support bars 15, which may support hand grips 10. Further, the supportive vehicle 100 can have brake handles 17, by which brakes can be actuated to allow the user to stop the supportive vehicle 100, or to reduce the supportive vehicle's speed.

According to some embodiments, which could be combined with other embodiments described herein, the fixing system 20 for a supportive vehicle 100 includes a housing 22, a first fixing unit associated with the housing 22 and configured to be fixed to the supportive vehicle 100, a flexible unit 23 having a first end and a second end, a retractor mechanism for the flexible unit 23, wherein the retractor mechanism is provided within the housing 22 and the first end of the flexible unit is fixed to said retractor mechanism, and a secure element provided at the second end and configured to fix the supportive vehicle 100.

According to some embodiments, which could be combined with other embodiments described herein, the retractor mechanism as understood herein is self-actuated. Typically, the retractor is adapted to provide a retracting force to the flexible unit in order to wind the flexible unit. According to some embodiments, the first end of the flexible unit may be fixed to a spool of the retractor mechanism. As an example, a spring of the retractor mechanism is configured to apply a rotation force, or torque, to the spool. Thereby, the spool can rotate in a first direction and wind up the flexible unit. According to some embodiments, when a user pulls the flexible unit, the spool may rotate in a second direction opposite the first direction, which may turn the attached spring in the same direction. Thus, the rotating spool may work to untwist the spring. According to some embodiments, the spring is configured to tend to return to its original shape, so it can resist this twisting motion. Once the flexible unit is released, the spring may tighten up, rotating the spool in the first direction, for instance until there is no more slack in the flexible unit.

According to some embodiments, which could be combined with other embodiments described herein, the fixing system 20 can be provided detachably from the supportive vehicle 100. This has the particular beneficial effect that one fixing system 20 can be used for two or more supportive vehicles.

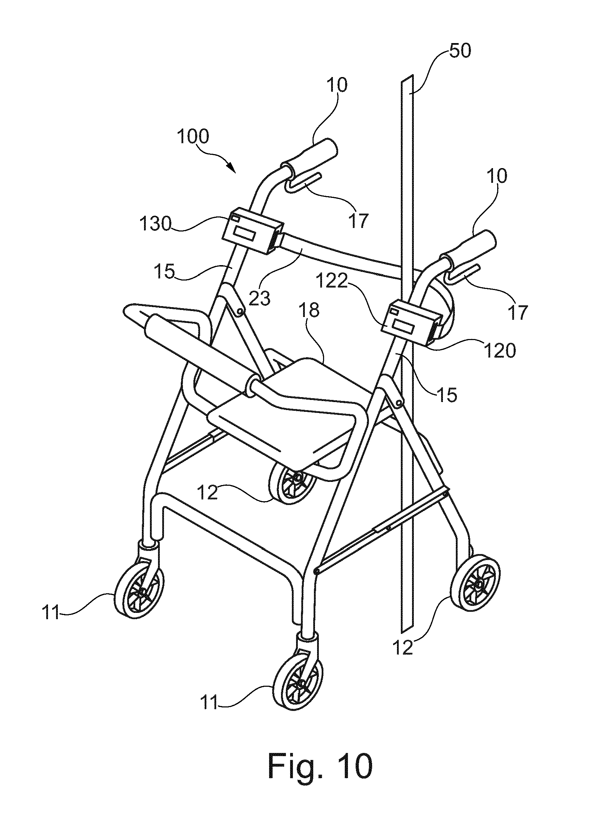

According to some embodiments, which could be combined with other embodiments described herein, the supportive vehicle 100 may include the one or more support bars 15, e.g., supporting the hand grips 10, wherein the fixing system 20 can be attached or fixed to one of said support bars 15, as it is shown in the embodiment of figure 2. According to some other embodiments, the fixing system can be attached or fixed to two of the support bars 15, as it is for instance shown in the embodiments of figures 10 to 12 and described later. In the latter case, for instance the housing accommodating the retraction mechanism and the elastic unit could be fixed or attached to one of the support bars 15, and the lock unit could be fixed or attached to another one of the support bars 15.

Although the embodiment of figure 2 shows that the fixing system 20 is fixed to one of the support bars 15, the present disclosure is not limited thereto. The fixing system 20 could be fixed to any suitable element of the supportive vehicle 100.

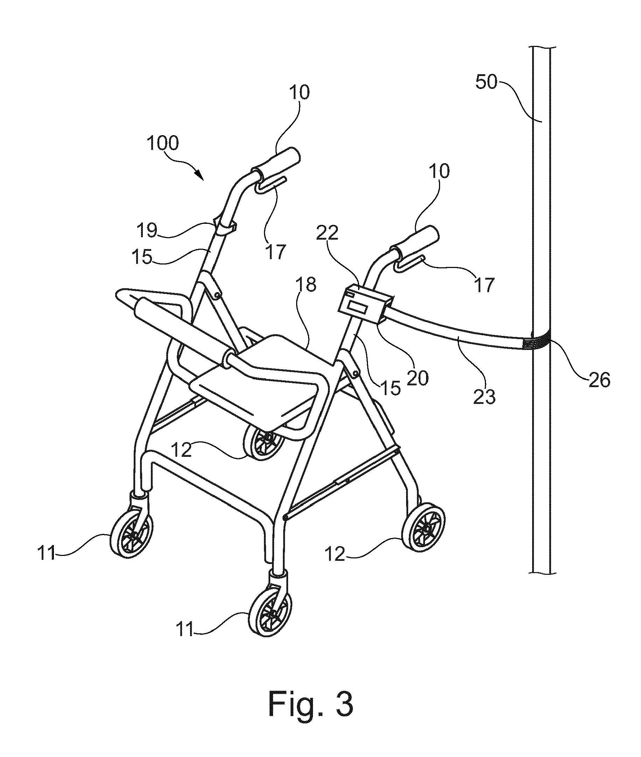

Figure 3 shows a schematic view of an embodiment where the supportive vehicle 100 is fastened to a bar 50, for instance in a bus or train, by means of the fixing system 20 according to embodiments described herein.

According to some embodiments, which could be combined with other embodiments described herein, the secure element provided at the second end of the elastic unit 23 is a hook 26.

According to some embodiments, which could be combined with other embodiments described herein, for fixing the supportive vehicle 100 to the bar 50, a user may pull the elastic unit 23 out of the housing 22 and use the hook 26 to secure the supportive vehicle 100 at the bar 50, i.e., by hooking. Thereby, the supportive vehicle 100 can be fastened to the bar 50 and can be prevented from moving e.g. during a movement of the bus or train.

According to some embodiments, which could be combined with other embodiments described herein, the fixing system 20 further includes a joint or pivot configured to allow pulling the elastic unit 23 out of the housing 22 in different directions (or at different angles) with respect to said housing 22. In typical embodiment, the joint is a ball joint. This increases a user convenience, since the user could pull out the elastic unit 23 in different directions with respect to the housing 22, for instance, in an angle of between 30° and 45°, such as 35°.

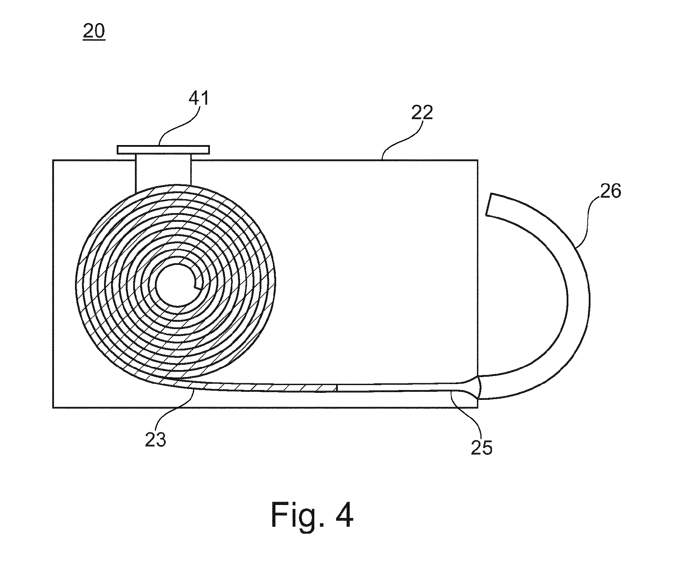

Figure 4 shows a schematic view of an embodiment of a fixing system 20 according to embodiments described herein.

According to some embodiments, which could be combined with other embodiments described herein, the fixing system 20 for the supportive vehicle 100 may include the housing 22, the first fixing unit associated with the housing 22 and configured to be fixed to the supportive vehicle 100, the flexible unit 23 having the first end and the second end 25, the retractor mechanism for the flexible unit 23, wherein the retractor mechanism is provided in the housing 22 and the first end of the flexible unit 23 is fixed to said retractor mechanism, and the secure element provided at the second end and configured to fix the supportive vehicle. In the embodiment shown in figure 4, the secure element is a hook 26.

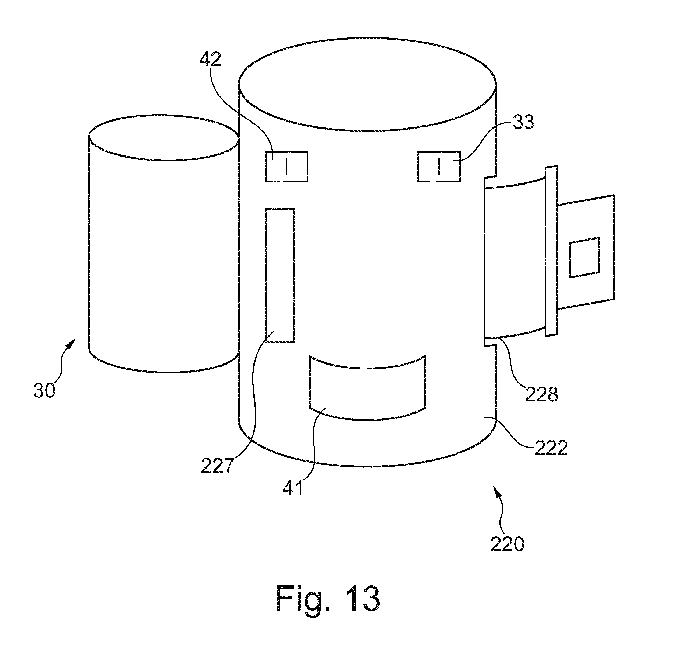

Referring to the embodiment of figure 4, the fixing system 20 may include the housing 22. Although the housing 22 is illustrated with a substantially rectangular shape, the present disclosure is not limited thereto. Particularly, the housing 22 could have any other shape suitable for accommodating at least the retractor mechanism. According to some embodiments, the housing 22 could have a substantially cylindrical shape, as it is for instance shown in figure 13. According to some embodiments, the housing 22 can have rounded edges or corners. This may prevent injuries caused by sharp edges or corners, particularly when elderly persons use the fixing system for instance for their rollators.

According to some embodiments, which could be combined with other embodiments described herein, the flexible unit 23 can include at least one of a belt, a band, a rope, or a chain. According to some embodiments, the flexible unit 23 can include a robust material which cannot easily be cut. For instance, the robust material may include fabric woven, such as nylon, polypropylene, polyester, Dyneema or Kevlar. According to some embodiments, which could be combined with other embodiments described herein, the belt, band, rope, or chain could be made of fabric woven, such as nylon, polypropylene, polyester, Dyneema or Kevlar.

According to some embodiments, which could be combined with other embodiments described herein, the flexible unit 23 may be configured for being reeled up by the retractor mechanism provided in the housing 22. Hereto, the retractor mechanism could be configured to apply a retraction force to the flexible unit to reel it up. The first end of said flexible unit 23 may be fixedly attached to the retractor mechanism, and the second end 25 may exit the housing 22 through an opening. According to some embodiments, the opening could be a slit provided in the housing 22. According to some embodiments, which could be combined with other embodiments described herein, for fixing the supportive vehicle 100 to a fixed element such as a post or bar (e.g., the bar 50 shown in figure 3), the user may grab the second end 25 or the hook 26 and pull the elastic unit 23 out of the housing 22, i.e., unreel the elastic unit 23 from the retractor mechanism, and use the hook for hooking. Thereby, the supportive vehicle 100 can be securely fastened to the fixed element.

According to some embodiments, which could be combined with other embodiments described herein, the retractor mechanism includes a spool, to which the first end of the flexible unit may be attached. As an example, a spring of the retractor mechanism is configured to apply a rotation force, or torque, to the spool. Thereby, the spool can rotate in a first direction and wind up the flexible unit. According to some embodiments, when a user pulls the flexible unit, the spool may rotate in a second direction opposite the first direction, which may turn the attached spring in the same direction. Thus, the rotating spool may work to untwist the spring. According to some embodiments, the spring is configured to tend to return to its original shape, so it can resist this twisting motion. Once the flexible unit is released, the spring may tighten up, rotating the spool in the first direction, for instance until there is no more slack in the flexible unit.

According to some embodiments, which could be combined with other embodiments described herein, the retractor mechanism may include a locking mechanism, for instance an inertial locking mechanism. The locking mechanism may be configured to lock the flexible unit 23 in position. This is particularly beneficial when the fixing system 20 is used to fix the supportive vehicle 100 in a motor vehicle such as a bus or train. When the motor vehicle abrupt accelerates or decelerates, e.g. brakes, it can be ensured that the supportive vehicle 100 stays steadily in its intended place.

According to some embodiments, the fixing system 20 includes an activating device for the locking mechanism. As an example, the user may activate the activating device to lock the flexible unit in position, e.g., after having secured the supportive vehicle 100 to a bar. According to some embodiments, the activating device is a press button provided at the housing 22.

According to some embodiments, which could be combined with other embodiments described herein, the fixing system 20 may further include an actuation device configured for releasing a locking of the flexible unit 23 and/or the retractor mechanism. As an example, the actuation device could be a press button provided at the housing 22.

According to some embodiments, which could be combined with other embodiments described herein, the activating device and the actuation device are provided as one single device. Referring to figure 4, the activating device and the actuation device are provided in the form of press button 41.

According to some embodiments, which could be combined with other embodiments described herein, the fixing system 20 may include automatic tightening means, which may tighten the elastic unit 23 after securing the supportive vehicle 100. As an example, the automatic tightening means may retract the elastic unit 23 after securing so that the elastic unit 23 is not loose. Thereby, the supportive vehicle 100 can be even more securely fastened.

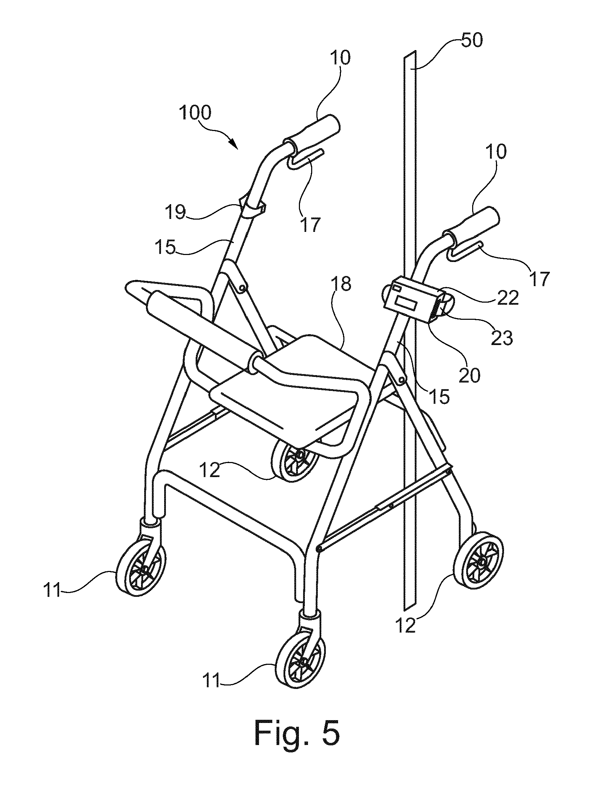

According to some embodiments, which could be combined with other embodiments described herein, the fixing device 20 further includes the first fixing unit, which is described later with reference to figures 5 to 13.Figure 5 shows a schematic view of an embodiment where the supportive vehicle 100 is fastened to a bar 50, for instance in a bus or train, by means of the fixing system 20 according to embodiments described herein.

According to some embodiments, which could be combined with other embodiments described herein, for fixing the supportive vehicle 100 to the bar 50, a user may pull the elastic unit 23 out of the housing 22, guide the elastic unit 23 around the bar 50, and insert the second end of the elastic unit 23 into the housing 22 where it can be locked by the lock unit. Thereby, the supportive vehicle 100 can be fastened to the bar 50 and can be prevented from moving e.g. during a movement of the bus or train.

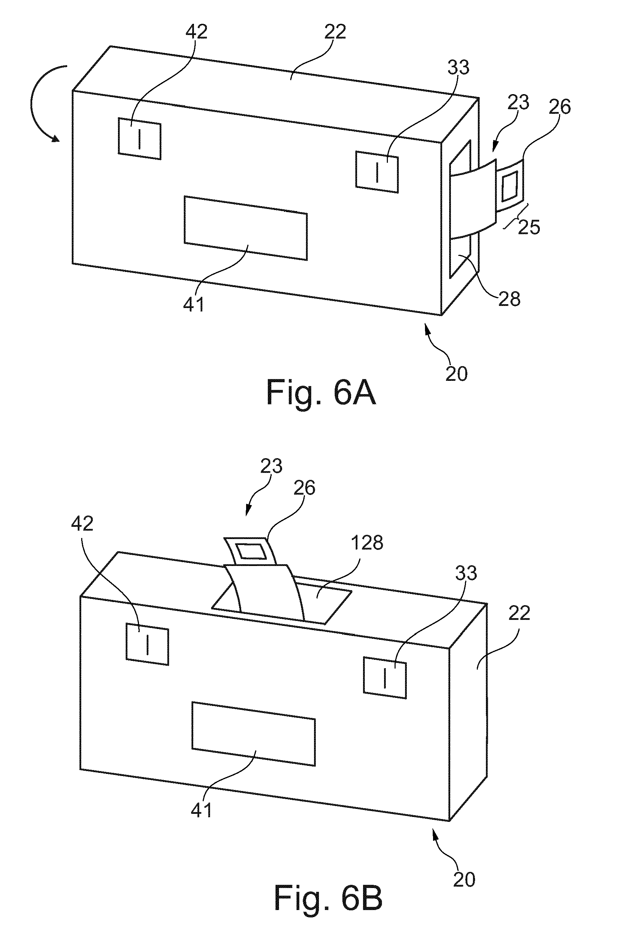

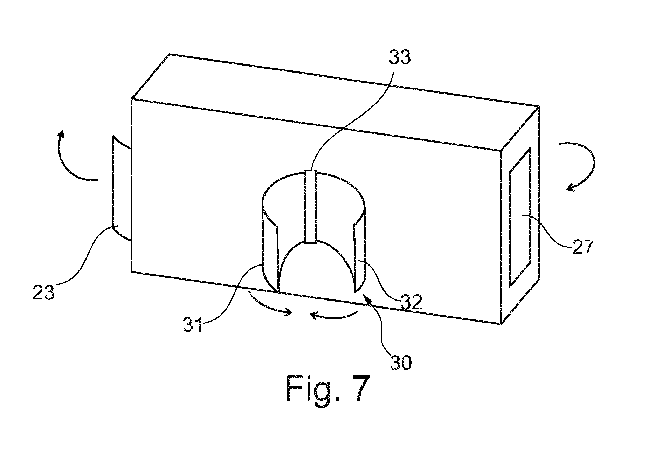

Figure 6A shows a schematic view of an embodiment of a fixing system 20 according to embodiments described herein. Figure 7 shows another schematic view of an embodiment of the fixing system 20 of the embodiment of figure 6A according to embodiments described herein. Particularly, figure 6A shows a front side of the fixing system 20, and figure 7 illustrates a backside thereof.

According to some embodiments, which could be combined with other embodiments described herein, the fixing system 20 for the supportive vehicle 100 may include the housing 22, the first fixing unit 30 associated with the housing 22 and configured to be fixed to the supportive vehicle 100, the flexible unit 23 having the first end and the second end 25, the retractor mechanism for the flexible unit 23, wherein the retractor mechanism is provided in the housing 22 and the first end of the flexible unit 23 is fixed to said retractor mechanism, and a lock unit configured for locking the second end 25 of the flexible unit 23. According to some embodiments, the second end 25 includes the hook as described with reference to figures 3 and 4.

Referring to the embodiment of figure 6A, the fixing system 20 may include the housing 22. Although the housing 22 is illustrated with a substantially rectangular shape, the present disclosure is not limited thereto. Particularly, the housing 22 could have any other shape suitable for accommodating at least the retractor mechanism. According to some embodiments, the housing 22 could have a substantially cylindrical shape, as it is for instance shown in figure 13. According to some embodiments, the housing 22 can have rounded edges or corners. This may prevent injuries caused by sharp edges or corners, particularly when elderly persons use the fixing system for instance for their rollators.

According to some embodiments, which could be combined with other embodiments described herein, the flexible unit 23 can include at least one of a belt, a band, a rope, or a chain. According to some embodiments, the flexible unit 23 can include a robust material which cannot easily be cut. For instance, the robust material may include fabric woven, such as nylon, polypropylene, polyester, Dyneema or Kevlar. According to some embodiments, which could be combined with other embodiments described herein, the belt, band, rope, or chain could be made of fabric woven, such as nylon, polypropylene, polyester, Dyneema or Kevlar.

According to some embodiments, which could be combined with other embodiments described herein, the flexible unit 23 may be configured for being reeled up by the retractor mechanism provided in the housing 22. Hereto, the retractor mechanism could be configured to apply a retraction force to the flexible unit to reel it up. The first end of said flexible unit 23 may be fixedly attached to the retractor mechanism, and the second end 25 may exit the housing 22 through an opening 28. According to some embodiments, the opening 28 could be a slit provided in the housing 22. According to some embodiments, which could be combined with other embodiments described herein, for fixing the supportive vehicle 100 to a fixed element such as a post or bar (e.g., the bar 50 shown in figure 3), the user may grab the second end 25 and pull the elastic unit 23 out of the housing 22, i.e., unreel the elastic unit 23 from the retractor mechanism, guide the elastic unit 23 around the fixed element, and insert the second end 25 of the elastic unit 23 into the housing 22 where it can be locked by the lock unit. Thereby, the supportive vehicle 100 can be securely fastened to the fixed element.

According to some embodiments, which could be combined with other embodiments described herein, the retractor mechanism includes a spool, to which the first end of the flexible unit may be attached. As an example, a spring of the retractor mechanism is configured to apply a rotation force, or torque, to the spool. Thereby, the spool can rotate in a first direction and wind up the flexible unit. According to some embodiments, when a user pulls the flexible unit, the spool may rotate in a second direction opposite the first direction, which may turn the attached spring in the same direction. Thus, the rotating spool may work to untwist the spring. According to some embodiments, the spring is configured to tend to return to its original shape, so it can resist this twisting motion. Once the flexible unit is released, the spring may tighten up, rotating the spool in the first direction, for instance until there is no more slack in the flexible unit.

According to some embodiments, which could be combined with other embodiments described herein, the second end 25 of the flexible unit 23 may include a latch plate 260. The latch plate 260 could be configured for being locked by the lock unit. As an example, the lock unit may include a buckle configured for engaging and/or locking the latch plate 260. The latch and buckle configuration provides the beneficial effect of easy handling. According to some embodiments, the second end 25 includes the hook as described with reference to figures 3 and 4. An end of the hook may be configured as the latch plate.

According to some embodiments, which could be combined with other embodiments described herein, the lock unit may be provided in or at the housing 22. In the embodiments of figures 6A and 7, the lock unit may be provided in the housing 22 and hence, is not visible in said figures. The lock unit may be accessible through an opening 27 provided in the housing 22. Particularly, the second end 25 of the elastic unit 23 can be inserted into the housing 22 through said opening 27 in order to be locked by the lock unit.

According to some embodiments, which could be combined with other embodiments described herein, the fixing system 20 may further include an actuation device 41 configured to release the locking of the second end 25 when being activated. As an example, the actuation device 41 could be a press button provided at the housing 22 configured to release the locking of the second end 25 when being pressed. Thereby, the locking of the second end 25 can easily be released.

According to some embodiments, which could be combined with other embodiments described herein, the lock unit may include a key lock 42. When a user locks the key lock 42, e.g., by means of a key, releasing the locking of the second end 25 is not possible. This provides anti-theft protection. As an example, the supportive vehicle 100 could be fastened to any fixed element, such as a post, and left unattended for instance, if the rollator's user sits outside the visible range in a train.

According to some embodiments, which could be combined with other embodiments described herein, the retractor mechanism may include an inertial locking mechanism. This is particularly beneficial when the fixing system 20 is used to fix the supportive vehicle 100 in a motor vehicle such as a bus or train. When the motor vehicle abrupt accelerates or decelerates, e.g. brakes, it can be ensured that the supportive vehicle 100 stays steadily in its intended place.

According to some embodiments, which could be combined with other embodiments described herein, the fixing system 20 may include automatic tightening means, which may tighten the elastic unit 23 after locking of the second end 25. As an example, the automatic tightening means may tighten the grip of the elastic unit 23 around a fixed element, e.g. the bar 50 shown in figure 3, after locking of the second end 25. Thereby, the supportive vehicle 100 can be even more securely fastened.

Turning now to figure 7, the fixing system 20 may include a first fixing unit 30 associated with the housing 22 and configured to be fixed to the supportive vehicle 100. Particularly, the first fixing unit 30 may be attached or fixed to the housing 22, or may be integrally formed with the housing 22. According to some embodiments, the first fixing unit 30 could be configured for being attached or fixed to the support bar 15 of the supportive vehicle 100, as it is shown in the embodiments of figures 4 and 5.

The embodiment illustrated in figure 7 has the first fixing unit 30 provided at a rear or back side of the housing 22. However, the present disclosure is not limited thereto, and the first fixing unit 30 could be provided at any position of the housing 22 (e.g., the frontside, backside, lateral sides, top and bottom sides). As an example, the first fixing unit 30 could be provided at one of the lateral sides of the housing. Similarly, the openings 27 and 28 could be provided at any position of the housing 22.

According to some embodiments, which could be combined with other embodiments described herein, the first fixing unit 30 may include a clamp mechanism configured for being clamped to the supportive vehicle 100. As an example, the clamp mechanism could be configured for being clamped to a support bar 15 of the supportive vehicle 100, as it is shown in the embodiments of figures 4 and 5.

According to some embodiments, which could be combined with other embodiments described herein, the first fixing unit 30 may include a bracket or clip configured for being attached or fixed to the supportive vehicle 100, and particularly to the support bar 15 of said supportive vehicle 100. In the embodiment shown in figure 7, the first fixing unit 30 may include a first fixing element 31 and a second fixing element 32. According to some embodiments, the first fixing element 31 and the second fixing element 32 could be substantially a half shell each.

According to some embodiments, the first fixing element 31 and the second fixing element 32 could be pivot-mounted by means of a hinge 33. According to some embodiments, the hinge 33 may be fixed to or integrally formed with the housing 22. In the embodiment shown in figure 5, the first fixing element 31 and the second fixing element 32 may be configured to enclose or surround an element of the supportive vehicle 100, for instance the support bar 15 shown in figures 4 and 5, for fixing the fixing system 20 to said supportive vehicle 100.

According to some embodiments, the first fixing element 31 and the second fixing element 32 could be configured for being locked in position. For instance, when the fixing system 20 is to be attached to the supportive vehicle 100, the first fixing element 31 and the second fixing element 32 could be made to surround or enclose an element of the supportive vehicle 100, for instance the support bar 15, and may then be locked. As an example, the first fixing element 31 and the second fixing element 32 may clamp the element of the supportive vehicle 100 for fixing the fixing system 20 to said supportive vehicle 100.

According to some embodiments, which could be combined with other embodiments described herein, the first fixing unit 30 may include a key lock 33 for locking the first fixing element 31 and the second fixing element 32 in position. According to some embodiments, when a user locks the key lock 33, e.g., by means of a key, releasing or opening the first fixing means 30 may not be possible. This provides anti-theft protection.

Figure 6B shows a schematic view of another embodiment of a fixing system according to embodiments described herein. The embodiment of figure 6B differs from the embodiment of figure 6A in the position of the opening 128. Particularly, in figure 6B, the opening 128 is provided at an upper side of the housing 22. In typical embodiments, the second end 25 may exit the housing 22 through the opening 128 in a vertical direction. In typical embodiments, the first end of said flexible unit 23 may be fixedly attached to the retractor mechanism, and the second end 25 may vertically exit the housing 22 through said opening 128. In typical embodiments, the opening denoted with reference numeral 27 in figure 6A could be positioned at a lower side of the housing 22, e.g., opposite the opening 128.

According to some embodiments, the opening 128 could be a slit provided in the housing 22. According to some embodiments, which could be combined with other embodiments described herein, for fixing the supportive vehicle 100 to a fixed element such as a post or bar (e.g., the bar 50 shown in figure 3), the user may grab the second end 25 and pull the elastic unit 23 out of the housing 22, i.e., unreel the elastic unit 23 from the retractor mechanism, guide the elastic unit 23 around the fixed element, and insert the second end 25 of the elastic unit 23 into the housing 22 where it can be locked by the lock unit. Thereby, the supportive vehicle 100 can be securely fastened to the fixed element.

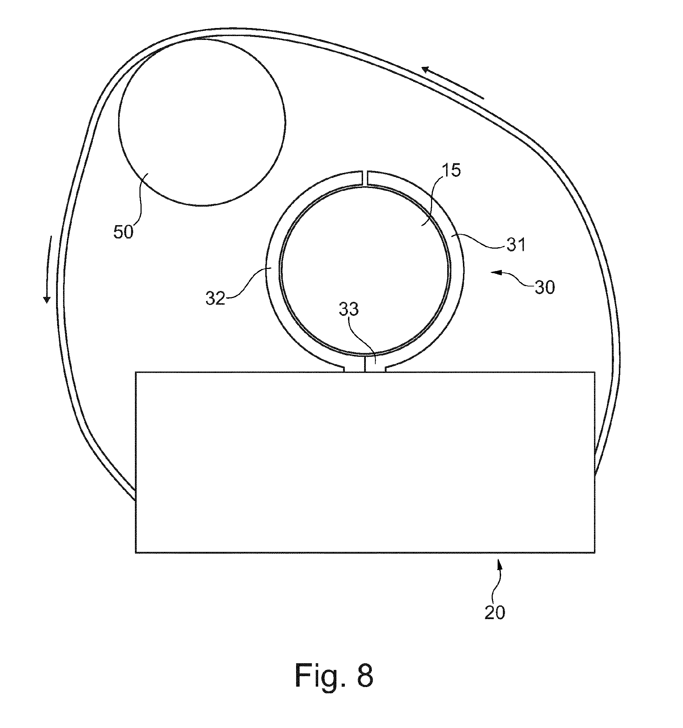

Figure 8 shows a plan view of an embodiment of the fixing system 20 of figures 5 and 6A being fastened to a bar, for instance in a bus or train.

As it is illustrated in the embodiment of figure 8, the elastic unit 23 may be guided around the bar 50. The second end of the elastic unit 23 may be inserted into the housing 22 where it can be locked by the lock unit. Thereby, the supportive vehicle may be securely fixed to the bar 50.

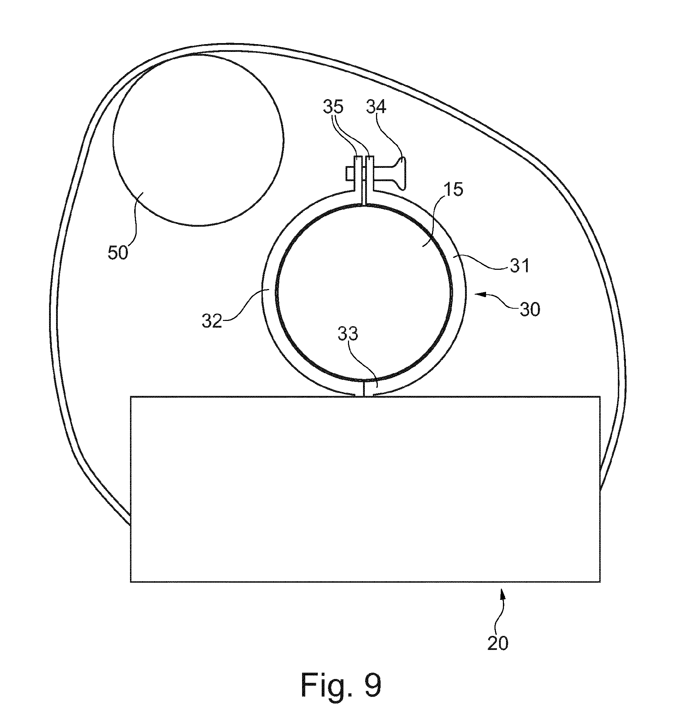

Figure 9 shows another plan view of an embodiment of the fixing system 20 being fastened to a bar 50, for instance in a bus or train.

The embodiment of the fixing system 20 illustrated in figure 7 may be similar to the embodiments of the fixing system shown in figures 2 to 8, and hence, the descriptions of similar or identical elements given above with reference to figure 2 to 8 may also apply to the elements shown in figure 9.

The embodiment of the fixing unit 30 illustrated in figure 9 may include the first fixing element 31 and the second fixing element 32, wherein each of said fixing element 31, 32 may have a bended portion 35. The bended portions 35 could be configured to be connected by means of a connection element 34, for instance a screw. Thereby, the first fixing element 31 and the second fixing element 32 can be locked in position.

According to some embodiments, which could be combined with other embodiments described herein, the configuration having the bended portions 35 and the connection element 34 may provide a clamping mechanism for clamping the fixing unit 30 to the supportive vehicle 100. Thereby, the fixing unit 30 can be fixed to the supportive vehicle 100, for instance the support bar 15 shown in figure 9.

According to some embodiments, which could be combined with other embodiments described herein, the first fixing unit 30 may include a key lock 33, similar to the key lock described above. According to some embodiments, when a user locks the key lock 33, e.g., by means of a key, releasing or opening the first fixing means 30 may not be possible. This provides anti-theft protection.

Figure 10 shows a schematic view of a supportive vehicle 100 having another fixing system 120 according to embodiments described herein.

The embodiment of the fixing system 120 illustrated in figure 10 is similar to the fixing system 20 shown in figures 2 to 9, and hence, descriptions of similar or identical elements given above with reference to figure 4 to 9 also apply to the embodiment shown in figure 10.

The fixing system 120 differs from the fixing system 20 shown in figures 4 to 7 in that the lock unit 130 could be provided as a separate unit or entity. In other words, the lock unit 130 may be provided separate or remote from the housing 122 accommodating the retractor mechanism and the elastic unit. In the example shown in figure 10, the housing 122 accommodating the retractor mechanism and the elastic unit is fixed to one of the support bars 15 of the supportive vehicle 100, and the lock unit 130 may be fixed to another support bar 15 of the supportive vehicle 100.

Although in the embodiment of figure 10 it is shown that the fixing system 120 is fixed to two of the support bars 15, the present disclosure is not limited thereto. The fixing system 120 could be fixed to any suitable elements of the supportive vehicle 100.

According to some embodiments, the lock unit 130 may include a second fixing unit 130 configured to be fixed to the supportive vehicle 100. The second fixing unit 130 can be configured similar to the first fixing unit 30 described above with reference to figures 4 to 9, and the above description also applies to the second fixing unit 130. According to some embodiments, which could be combined with other embodiments described herein, the second fixing unit 130 may include a key lock 133 (see figure 9). The key lock 33 may be similar or identical to the key lock 33 described above with reference to figure 6 to 9. As an example, when a user locks the key lock 133, e.g., by means of a key, releasing or opening the first fixing means 130 may not be possible. This provides anti-theft protection.

According to some embodiments, which could be combined with other embodiments described herein, the fixing system 20, and particularly the housing 122 and the lock unit 130, may be provided detachably. This has the particular beneficial effect that one fixing system 120 can be used for two or more supportive vehicle.

According to some embodiments, which could be combined with other embodiments described herein, the supportive vehicle 100 may include the one or more support bars 15, e.g., supporting the hand grips 10, wherein the housing 122 can be attached or fixed to one of the support bars 15, and the lock unit 130 can be attached or fixed to another support bar 15, as it is shown in the embodiment of figure 10.

According to some embodiments, which could be combined with other embodiments described herein, for fixing the supportive vehicle 100 to the bar 50, a user may pull the elastic unit 23 out of the housing 122, guide the elastic unit 23 around the bar 50, and insert the second end of the elastic unit 23 into the lock unit 130 where it could be locked. Thereby, the supportive vehicle 100 can be secured to the bar 50 and can be prevented from moving during a movement of the bus or train.

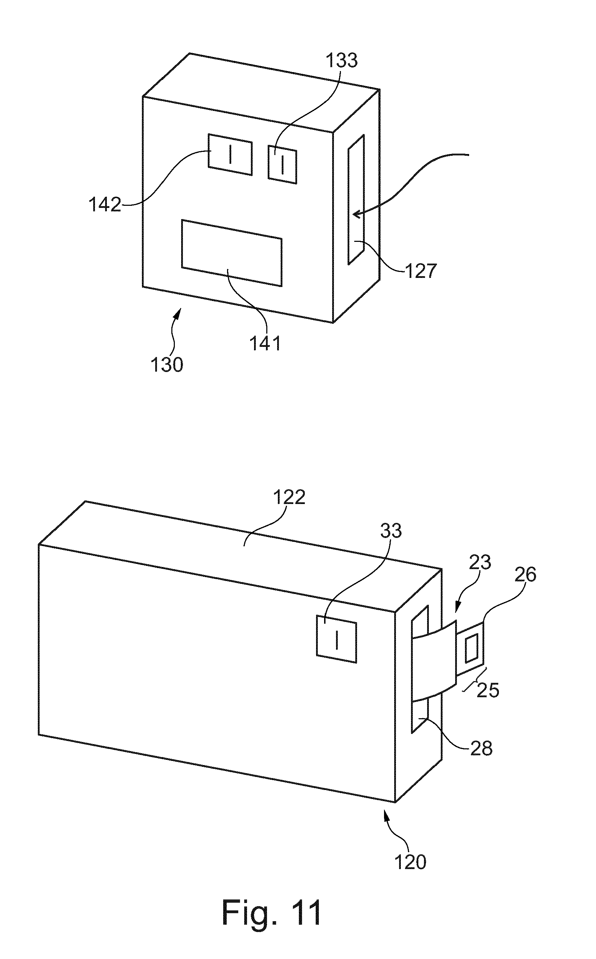

Figure 11 shows a schematic view of the fixing system 120 shown in figure 10 according to embodiments described herein.

Referring to figure 11, the embodiment of the fixing system 120 may include a housing 122. Although the housing 122 is illustrated with a substantially rectangular shape, the present disclosure is not limited thereto. Particularly, the housing 122 could have any other shape suitable for accommodating at least the retractor mechanism. According to some embodiments, the housing 122 could have a substantially cylindrical shape, as it is for instance shown in figure 13. According to some embodiments, the housing 122 could have rounded edges or corners. This may prevent injuries caused by sharp edges or corners, particularly when elderly persons use the fixing system for instance for their rollators.

The flexible unit 23 may be configured for being reeled up by the retractor mechanism provided in the housing 122. The first end of said flexible unit 23 may be fixedly attached to the retractor mechanism, and the second end 25 may exit the housing 122 through an opening 28. According to some embodiments, the opening 28 may be a slit provided in the housing 122. According to some embodiments, which could be combined with other embodiments described herein, the user may take the second end 26 and pull the elastic unit 23 out of the housing 122, i.e., unreel the elastic unit 23 from the retractor mechanism, guide the elastic unit 23 around a fixed element, such as the bar 50 shown in figure 10, and insert the second end 25 of the elastic unit 23 into the lock unit 130 provided remotely from the housing 122. Thereby, the supportive vehicle 100 can be securely fastened to the fixed element.

According to some embodiments, which could be combined with other embodiments described herein, the lock unit 130 may have an opening 127 for insertion of the second end 25 of the elastic unit 23. Particularly, the second end 25 of the elastic unit 23 could be inserted into the opening 27 for being locked. Hereto, according to some embodiments, the lock unit 130 may include a lock mechanism configured for locking the second end 25 of the flexible unit 23.

According to some embodiments, which could be combined with other embodiments described herein, the second end 25 of the flexible unit 23 may include a latch plate 26. The latch plate 26 may be configured for being locked by the lock unit 130. As an example, the lock unit 130 may include a buckle configured for locking the latch plate 26. The latch and buckle configuration provides the beneficial effect of easy handling. According to some embodiments, the second end 25 includes the hook as described with reference to figures 3 and 4. An end of the hook may be configured as the latch plate.

According to some embodiments, which could be combined with other embodiments described herein, the lock unit 130 may further include an actuation device 141 configured to release the locking of the second end 25 when being activated. As an example, the actuation device 141 could be a press button provided at a housing of the lock unit 130 and configured to release the locking of the second end 25 when being pressed. Thereby, the locking of the second end 25 can be easily released.

According to some embodiments, which could be combined with other embodiments described herein, the lock unit 130 may include a key lock 142. When a user locks the key lock 142, e.g., by means of a key, releasing the locking of the second end 25 may not be possible. This provides anti-theft protection. As an example, the supportive vehicle 100 could be fastened to any fixed element, such as a post, and left unattended for instance in front of a supermarket and the like, without the risk of being stolen.

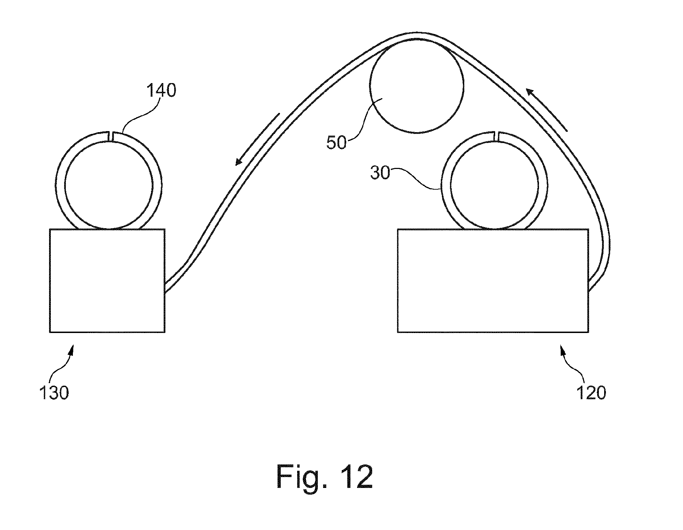

Figure 12 shows a plan view of the fixing system of figures 10 and 11 being fastened to a bar 50, for instance in a bus or train.

As it is illustrated in figure 12, the elastic unit 23 may be guided around the bar 50. The second end of the elastic unit 23 can be inserted into the lock unit 130 where it is locked. Thereby, the supportive vehicle 100 can be securely fixed to the bar 50.

The fixing system 120 has the further beneficial effect that, when the second end of the elastic unit 23 is inserted into the lock unit 130 and is locked, the elastic element 23 could serve as a backrest for a person sitting on the seat 18 of the supportive vehicle 100 (see also figure 10).

The embodiments illustrated in figures 10 to 12 have the first and second fixing units 30, 130 provided at a rear or back side of the housing 122 and the lock unit 130, respectively. However, the present disclosure is not limited thereto, and the first and second fixing units 30, 140 could be provided at any position of the housing 122 and the lock unit 130 (e.g., the frontside, backside, lateral sides, top and bottom sides of the housing 122 and the lock unit 130). As an example, the first fixing unit 30 and the second fixing unit 140 could be provided at one of the lateral sides of the housing 122 and the lock unit 130, respectively. Similarly, the opening 28 provided at the housing 122 and the opening 127 of the lock unit 130 could be provided at any position of the housing 122 and the lock unit 130, respectively.

Particularly, the embodiments of figures 10 and 11 show the opening 28 positioned at the vertical side of the housing facing away from the lock unit 130 (i.e., the right side in figure 10). In another example, the opening 28 could be positioned at the vertical side of the housing 122 facing towards the lock unit 130 (i.e., the left side in figure 10). Similarly, the embodiments of figures 8 and 9 shows the opening 127 positioned at the vertical side of the lock unit 130 facing towards the housing 122 (i.e., the right side in figure 10). In another example, the opening 127 could be positioned at the vertical side of the lock unit 130 facing away from the housing 122 (i.e., the left side in figure 10).

According to some embodiments, which could be combined with other embodiments described herein, the housing 122 and/or lock unit 130 may have a substantially cylindrical shape.

Figure 13 shows a schematic view of still another fixing system 220 according to embodiments described herein.

The fixing system 220 illustrated in figure 13 is similar to the fixing system 20 shown in figures 2 to 12, and hence, descriptions of similar or identical elements given above with reference to figure 2 to 12 also apply to the embodiment shown in figure 13.

According to some embodiments, which could be combined with other embodiments described herein, the fixing system 220 may have a substantially cylindrical shape. Particularly, the fixing system 220 may include a housing 222 having a substantially cylindrical shape. According to some embodiments, the housing 222 can include an opening 227 for insertion of the second end of the elastic unit, and an opening 228 through which the elastic unit may exit the housing 222. The embodiment of the fixing system 220 shown in figure 11 may particularly include at least one of the first fixing unit 30, the lock keys 42 and 33, and the actuation device 41.

According to some embodiments, which could be combined with other embodiments described herein, the second end of the elastic unit may include the hook as described with reference to figures 3 and 4. In such a case, the housing 222 may not include the opening 227 of figure 13.

Each of the fixing systems described above and shown in figures 1 to 13 could be provided at the supportive vehicle at a height of 50-80 cm with respect to ground. This provides convenient accessibility of the fixing device particularly for elderly people. Further, each of the fixing systems described above, and particularly each of the housings, could have dimensions of 5 to 15 cm in each direction.

The embodiments described herein provide the beneficial effect that a supportive vehicle can be securely fixed e.g. inside a moving vehicle, such that the supportive vehicle is steadily kept in place when the moving vehicle is moving, in particular accelerating or decelerating. Further, according to some embodiments, the fixing system could provide a backrest for a person sitting on a seat of the supportive vehicle, thereby increasing a user convenience.

While the foregoing is directed to embodiments of the invention, other and further embodiments of the invention may be devised without departing from the basic scope thereof, and the scope thereof is determined by the claims that follow.

## Claims

1. Supportive vehicle (100) comprising a fixing system (20, 120, 220), the fixing system (20, 120, 220) comprising:
a housing (22, 122, 222),
a first fixing unit (30) associated with the housing (22, 122, 222) and configured to be fixed to the supportive vehicle (100),
a flexible unit (23) having a first end and a second end (25),
a retractor mechanism for the flexible unit (23), wherein the retractor mechanism is provided in the housing (22, 122, 222), and the first end of the flexible unit (23) is fixed to said retractor mechanism, and
a secure element provided at the second end and configured to fix the supportive vehicle (100).

2. Supportive vehicle (100) according to claim 1, wherein the secure element includes a hook.

3. Supportive vehicle (100) according to claim 1 or 2, wherein the fixing system (20, 220) further includes a lock unit configured for locking the secure element.

4. Supportive vehicle (100) according to claim 3, wherein the lock unit is provided in or at the housing (22, 222).

5. Supportive vehicle (100) according to claim 3, wherein the lock unit (130) is provided as a separate unit, wherein preferably the lock unit (130) includes a second fixing unit (140) configured to be fixed to the supportive vehicle (100).

6. Supportive vehicle (100) according to any of the preceding claims, wherein at least one of the first fixing unit (30) and the second fixing unit (140) includes a clamp mechanism configured to be clamped to the supportive vehicle (100).

7. Supportive vehicle (100) according to any of the preceding claims, wherein at least one of the first fixing unit (30) and the second fixing unit (140) includes a key lock (33).

8. Supportive vehicle (100) according to any claims 3 to 7, wherein the lock unit includes a key lock (42, 142, 242).

9. Supportive vehicle (100) according to any of the preceding claims, wherein the flexible unit (23) includes a belt, a band, a rope, or a chain.

10. Supportive vehicle (100) according to any of the preceding claims, wherein the second end (25) of the flexible unit (23) includes a latch plate (260).

11. Supportive vehicle (100) according to any of claims 3 to 10, wherein the lock unit includes a buckle configured for locking the second end (25) of the flexible unit (23).

12. Supportive vehicle (100) according to any one of the preceding claims, wherein the retractor mechanism includes a locking mechanism, particularly an inertial locking mechanism, preferably further including an actuation device (41, 141, 242) configured to release the locking mechanism.

13. Supportive vehicle (100) according to any one of the preceding claims, comprising one or more support bars (15), wherein the fixing system (20, 220) is fixed to one of the support bars (15).

14. Supportive vehicle (100) according to any one of preceding claims 1 to 12, comprising one or more support bars (15), wherein the housing (122) is fixed to one of the support bars (15), and the lock unit (130) is fixed to another one of the support bars (15).

15. Supportive vehicle (100) according to any one of the preceding claims, wherein the supportive vehicle (100) is a rollator, a stroller or a trolley.
